# EUROPÄISCHE PATENTANMELDUNG

(11) **EP 1 591 224 A1**
(43) Veröffentlichungstag der Anmeldung: **02.11.2005**
(21) Anmeldenummer: 04101772.4
(22) Anmeldetag: 27.04.2004
(51) Int. Cl.: B29C 44/18, B60R 13/08, B32B 5/20

(54) **Vorrichtung und Verfahren zur Schalldämpfung in Hohlräumen von Fahrzeugen**

(71) Anmelder: Sika Technology AG, 6340 Baar (CH)
(72) Erfinder: Hasler, Thomas, 8903 Birmensdorf (CH); Millet, Pierre, 8052 Zürich (CH)
(74) Vertreter: Isler, Jörg

(57) **Zusammenfassung**

Es wird eine dämpfungsvorrichtung (16), insbesondere zum Einbau in oder an Hohlräume insbesondere von Fahrzeugen, und ein Verfahren vorgeschlagen, wobei die Dämpfungsvorrichtung (16) ein Trägermaterial (4) und ein Abschottungsmaterial (2) umfasst und wobei die Dämpfungsvorrichtung (10) zur Befestigung an einem Strukturelement (1), insbesondere eines Fahrzeugs, vorgesehen ist, wobei weiterhin die Dämpfungsvorrichtung (16) ein Dämpfungsmaterial (3) aufweist, wobei das Dämpfungsmaterial (3) zur Ausbildung einer offenzelligen Zellstruktur vorgesehen ist oder wobei das Dämpfungsmaterial einen Absorptionskoeffizienten für Schallwellen von größer als etwa 0,5 aufweist.

## Beschreibung

Diese Erfindung betrifft eine Dämpfungsvorrichtung, insbesondere zum Einbau in oder an Hohlräume insbesondere von Fahrzeugen, wobei die Dämpfungsvorrichtung ein Trägermaterial, ein Abschottungsmaterial und ein Dämpfungsmaterial umfasst und wobei die Dämpfungsvorrichtung zur Befestigung an einem Strukturelement, insbesondere eines Fahrzeugs, vorgesehen ist. Die Dämpfungsvorrichtung wird insbesondere mittels des Trägermaterials an dem Strukturelement, insbesondere eine Hohlprofilstruktur eines Automobils oder eines ähnlichen Fahrzeugs, befestigt und anschließend wird das Dämpfungsmaterial und das Abschottungsmaterial gebläht bzw. einer Expansion unterzogen, die insbesondere eine hitzeinduzierte Expansion ist. Hierdurch wirkt die Dämpfungsvorrichtung als hochwirksame Dichtung bzw. Abschottung sowie als akustische Dämpfung an dem Strukturelement und insbesondere innerhalb des Hohlraums.

Weiterhin betrifft diese Erfindung ein Verfahren zur Abschottung und/oder Schalldämpfung, insbesondere in oder an Hohlräumen insbesondere von Fahrzeugen, wobei eine Dämpfungsvorrichtung umfassend ein Trägermaterial, ein Abschottungsmaterial und ein Dämpfungsmaterial zunächst an dem Strukturelement befestigt oder angeordnet wird, und wobei anschließend eine Blähung bzw. Expansion des Abschottungsmaterials und des Dämpfungsmaterials erfolgt - insbesondere während eines Einbrennprozesses in einem Elektro-Tauchlackierungsofen. Die expandierte Dämpfungsvorrichtung dient dazu, das Strukturelement bzw. einen Hohlraum, den das Strukturelement bildet, zum einen gegen das Eindringen von Feuchtigkeit, Staub, Luft und anderen unerwünschten Flüssigkeiten abzudichten und zum anderen dazu, störende Geräusche, die andernfalls durch den Hohlraum hindurch gehen würden bzw. lediglich reflektiert würden, zu dämpfen.

### Stand der Technik

Während der Herstellung von Automobilen, Lastwagen und ähnlichen Straßenverkehrsmitteln oder allgemein sonstigen Fahrzeugen weisen viele der Karosserieteile Hohlräume auf, die ein Abdichten notwendig machen, um das Eindringen von Feuchtigkeit und kontaminierenden Stoffen zu verhindern, beispielsweise weil solche Stoffe und insbesondere Feuchtigkeit die Korrosion der Karosserieteile bewirken können. Dies ist insbesondere der Fall in Bezug auf einstückige Strukturen, in welchen ein Massivrahmen durch einen strukturell gestalteten Hohlprofilrahmen ersetzt ist, der inhärent eine Anzahl von Feuchtigkeit und kontaminierende Stoffe sammelnde Hohlräume aufweist. Diese Hohlräume dienen auch als Durchgänge, welche Lärm und andere Geräusche, die während des normalen Gebrauchs des Fahrzeugs durch diese hindurch übertragen werden, dämpfen. Zum Beispiel stellt die aufrecht stehende Profilstruktur einer Fahrzeugkarosserie, die einen Teil einer entsprechenden Fensteröffnung darstellt, einen verlängerten Durchgang oder Hohlraum dar, welcher Feuchtigkeit und kontaminierende Mittel sammeln und auch unerwünschte Geräusche übertragen kann, bis der Durchgang oder der Hohlraum zumindest teilweise mit einem Dichtungsmittel gefüllt ist, welches das Eindringen von Feuchtigkeit und Schmutz verhindert und das auch als Dämpfer für die Dämpfung von Geräuschen dient, die sonst entlang des Durchgangs oder des Hohlraums übertragen würden. Es wurden viele Versuche unternommen, diese Hohlräume abzudichten, einschließlich Einspritzen eines Dichtungsmittels in den Hohlraum, Einbringen von Schaumprodukten in solche Hohlräume und die Verwendung von Glasfasermatten und ähnlichem. Diese Versuche waren aufgrund der Ineffizienz der Dichtungs- und Dämpfungsverfahren, der relativ hohen Kosten des Dichtungsverfahrens bzw. Dichtungsmaterials und aufgrund der Tatsache, dass vielfach ungleichmäßige Dichtung erhalten wurde, nicht vollkommend zufriedenstellend.

Das Einbringen von Schäumen in die Hohlräume selbst war deshalb nicht vollständig zufriedenstellend, weil es Schwierigkeiten gab, zu kontrollieren, wohin der Schaum nach dem Einbringen des Schaums in den Hohlraum einer Fahrzeugkarosserie oder ähnlichem wandert. Weiterhin wurde üblicherweise mehr Schaum in den Karosseriehohlraum eingebracht als tatsächlich benötigt, um ein gewisses Übermaß an Schaum zur Verhinderung des Eindringens von Feuchtigkeit in den Hohlraum während der Verwendung des Fahrzeugs bereitzustellen. Zudem haben Schäume eine begrenzte Lebensdauer, was ihre Flexibilität vor dem Festwerden betrifft, wodurch die verfügbare Zeit beschränkt ist, während der der Schaum in den Hohlraum des Fahrzeugs eingebracht werden kann. Aus diesen Gründen sind als Alternativen zum Einbringen von Schäumen in die Hohlräume insbesondere von Automobilkarosserien Lösungen bekannt geworden, bei denen expandierbare Materialien in die Hohlräume eingebracht werden. Solche Materialien blähen sich bzw. expandieren insbesondere dadurch, dass sie erwärmt werden. Eine solche Erwärmung erfolgt üblicherweise bei der Herstellung von Fahrzeugkarosserien nach der Herstellung bzw. dem Zusammensetzen der Rohbaukarosserie und nach der Grundierung der Karosserie in einem Elektro-Tauchlackierungsofen-Prozess. Hierbei ist es weiterhin allgemein bekannt, dass solche expandierbare Materialien zusammen mit einem Trägermaterial - bzw. durch ein Trägermaterial gehalten - in den Hohlraum eingeführt werden. Dadurch ist es möglich, das expandierbare Material im Hohlraum an dem richtigen Platz zu befestigen.

Nachteilig bei solchen bekannten Lösungen und bei bekannten Materialien, die die Anforderungen insbesondere hinsichtlich der Festigkeit, Haltbarkeit und Korrosionsvermeidung erfüllen, sind insbesondere ihre akustischen Eigenschaften, die dazu führen, dass in den Hohlräumen auftretende bzw. vorhandene Schallenergie nicht ausreichend gedämpft wird, was insbesondere von Benutzern der Fahrzeuge als störend empfunden wird. Vielmehr wird die Schallenergie bei solchen bekannten Materialien und Blähformteilen lediglich abgeschottet, d.h. es findet eine Reflexion der Schallenergie statt. Es stellte sich daher die Aufgabe, solche bei den bekannten Materialien bzw. Lösungen auftretenden Nachteile zu vermeiden.

### Darstellung der Erfindung

Die Aufgabe wird durch eine Dämpfungsvorrichtung, insbesondere zum Einbau in oder an Hohlräume insbesondere von Fahrzeugen, gelöst, wobei die Dämpfungsvorrichtung ein Trägermaterial und ein Abschottungsmaterial umfasst und wobei die Dämpfungsvorrichtung zur Befestigung an einem Strukturelement, insbesondere eines Fahrzeugs, vorgesehen ist, wobei die Dämpfungsvorrichtung ein Dämpfungsmaterial aufweist und wobei das Dämpfungsmaterial zur Ausbildung einer offenzelligen Zellstruktur vorgesehen ist oder wobei das Dämpfungsmaterial einen Absorptionskoeffizienten für Schallwellen von größer als etwa 0,5 aufweist. Weiterhin wird die Aufgabe durch ein Verfahren zur Abschottung und/oder Schalldämpfung, insbesondere in oder an Hohlräumen insbesondere von Fahrzeugen, gelöst, wobei in einem ersten Schritt eine ein Trägermaterial, ein Abschottungsmaterial und ein Dämpfungsmaterial aufweisende, insbesondere erfindungsgemäße Dämpfungsvorrichtung an einem Strukturelement, insbesondere eines Fahrzeugs, befestigt oder angeordnet wird, wobei in einem zweiten Schritt das Abschottungsmaterial und das Dämpfungsmaterial expandiert wird, insbesondere wärmeexpandiert wird und wobei das Dämpfungsmaterial nach der Expansion eine offenzellige Zellstruktur aufweist oder wobei das Dämpfungsmaterial einen Absorptionskoeffizienten für Schallwellen von größer als etwa 0,5 aufweist. In überraschender Weise wird hierdurch eine erheblich bessere akustische Wirkung der Dämpfungsvorrichtung und damit der ganzen Karosserie bzw. des Fahrzeugs erzielt. Die akustische Wirkung der erfindungsgemäßen Dämpfungsvorrichtung basiert auf einer Kombination zwischen einer Abschottung der Hohlräume, die akustisch bewirkt, dass Schallenergie in oder am Dämpfungsmaterial (in geringerem Maße) reflektiert und (in größerem Maße) absorbiert wird. Hierdurch wird Schallenergie wesentlich effektiver in Wärme verwandelt und damit unschädlich gemacht. Weiterhin ist es mit der erfindungsgemäßen Dämpfungsvorrichtung und dem erfindungsgemäßen Verfahren in überraschender Weise möglich, bekannte Prozessfolgen und Prozessabläufe weiterhin anzuwenden und bewährte Materialien - insbesondere zur Abschottung des Hohlraums durch die Dämpfungsvorrichtung - zu verwenden, die die geforderten Eigenschaften insbesondere hinsichtlich der Korrosionsvermeidung an der Grenze zwischen dem Abschottungsmaterial und dem Strukturelement aufweisen. Die Dämpfungsvorrichtung wird im folgenden auch als Blähformteil bezeichnet.

Bevorzugt ist, dass das Abschottungsmaterial und/oder das Dämpfungsmaterial expandierbar, insbesondere hitzeexpandierbar, ist und dass die Expansion des Abschottungsmaterials und/oder des Dämpfungsmaterials derart vorgesehen ist, dass ein direkter Kontakt zwischen dem Dämpfungsmaterial und einer Wandung des Strukturelements vermieden wird oder ausgeschlossen ist. Hierdurch wird auf besonders einfache Art einer gegebenenfalls höheren Anfälligkeit des Dämpfungsmaterials für die Aufnahme von Feuchtigkeit und/oder für die Bildung von Korrosion bei einem Kontakt mit dem Strukturelement entgegengewirkt und trotzdem die vorteilhaften akustischen Eigenschaften erhalten.

Bevorzugt weist das Dämpfungsmaterial einen Absorptionskoeffizienten für Schallwellen von mindestens 0,8 auf - insbesondere wenigstens in einem Teilfrequenzbereich insbesondere zwischen etwa 1 kHz und etwa 5 kHz. Hierdurch ist zum einen sichergestellt, dass sich die vorteilhaften akustischen Wirkungen einstellen und zum anderen ist diese Wahl des Frequenzbereichs von besonderer Relevanz insbesondere für Fahrzeuge, besonders Straßenfahrzeuge wie Automobile und Lastkraftwagen, da zum einen akustische Störungen in diesem Frequenzbereich als besonders störend empfunden werden - was auch mit der erhöhten Empfindlichkeit des menschlichen Gehörs in diesem Frequenzbereich zusammenhängt - und zum anderen in diesem Frequenzbereich in Straßenfahrzeugen besonders intensive Schallquellen vorhanden sind.

Ferner ist bevorzugt, dass im Falle eines Kontakts zwischen der Wandung des Strukturelements und dem Abschottungsmaterial eine Korrosion der Wandung vermieden wird oder zumindest gehemmt ist, insbesondere hinsichtlich einer Randkorrosion und/oder einer Unterkorrosion. Hierdurch ist die erfindungsgemäße Dämpfungsvorrichtung besonders kostengünstig verwendbar, weil sie wie bekannte expandierbare Materialien verwendbar ist.

Bevorzugt ist weiterhin, dass das Abschottungsmaterial zur Ausbildung einer geschlossenzelligen Zellstruktur vorgesehen ist und dass das Abschottungsmaterial eine Wasseraufnahme aufweist, die geringer ist als etwa 10%, bevorzugt geringer als etwa 5%, besonders bevorzugt geringer als etwa 4% und ganz besonders bevorzugt geringer als etwa 3%. Hierdurch wird die Anfälligkeit für Korrosion an der Grenze zwischen dem Abschottungsmaterial und dem Strukturelement bzw. dessen Wandung weiter reduziert. Weiterhin ist dadurch das Abschottungsmaterial auch haltbarer und stabiler, da weniger stark zersetzbar.

Weiterhin ist bevorzugt, dass die Dämpfungsvorrichtung an dem Strukturelement befestigbar ist, insbesondere in oder an der Wandung des Strukturelements und insbesondere mittels eines am Trägermaterial angeordneten Rastelements. Hierdurch kann die Dämpfungsvorrichtung vor der Expansion des Abschottungsmaterials bzw. des Dämpfungsmaterials in reproduzierbarer und ausreichend fester bzw. stabiler Weise am Strukturelement bzw. dessen Wandung befestigt werden.

### Kurze Beschreibung der Zeichnung

Im folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- **Fig. 1**: eine schematische Darstellung eines Rohbaus einer Automobilkarosserie in perspektivischer Darstellung;
- **Fig. 2**: eine schematische Darstellung einer zwischen zwei Wandungen eines Strukturelements angeordneten erfindungsgemäßen Dämpfungsvorrichtung, wobei die expandierbaren Bestandteile der Dämpfungsvorrichtung expandiert sind;
- **Fig. 3**: eine schematische Darstellung eines mit dem Absorptionsmaterial und dem Dämpfungsmaterial gefüllen Rohrs als Beispiel eines Hohlraums;
- **Fig. 4**: zur Darstellung der zur Figur 3 zugehörigen Frequenzgängen der Absorptionscharakteristik der Materialien der erfindungsgemäßen Dämpfungsvorrichtung;
- **Fig. 5**: eine schematische Darstellung einer zwischen zwei Wandungen eines Strukturelements angeordneten erfindungsgemäßen Dämpfungsvorrichtung, wobei die expandierbaren Bestandteile der Dämpfungsvorrichtung noch nicht expandiert sind.

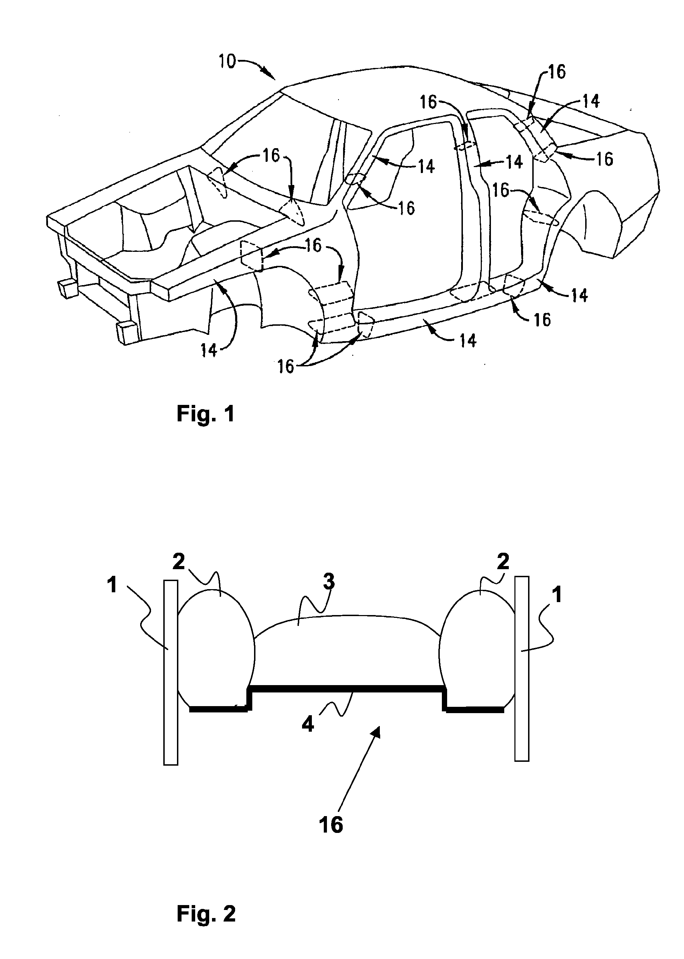

In **Figur 1** ist mit 10 ein Rohbau einer Fahrzeugkarosserie bezeichnet. Eine solche Karosserie weist in der Regel eine Mehrzahl von Strukturelementen 14 auf, wie beispielsweise die A-, B- und C-Säule, die sich insbesondere länglich erstrecken und in der Regel auch - zumindest in einem Teilbereich einen oder mehrere Hohlräume bilden. Quer zur Längserstreckung der Strukturelemente 14 verlaufende erfindungsgemäße Dämpfungselemente 16 sind in Figur 1 an mehreren Stellen mittels Pfeile angedeutet. Ihre Aufgabe ist es insbesondere, die Hohlräume möglichst hermetisch abzuschließen, so dass keine Gase, keine Dämpfe, keine Flüssigkeiten und nicht sonstige in den Hohlräumen möglicherweise Schäden verursachende Stoffe in den Hohlraum dringt.

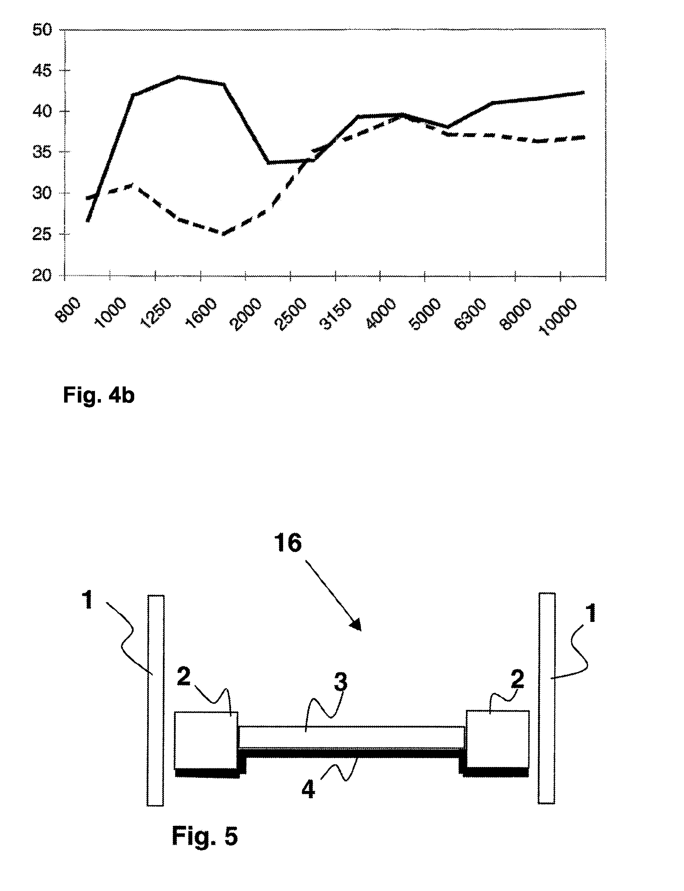

In **Figur 2** ist eine solche erfindungsgemäße Dämpfungsvorrichtung 16 schematisch darstellt. Die Dämpfungsvorrichtung 16 weist ein Trägermaterial 4, ein Abschottungsmaterial 2 und ein Dämpfungsmaterial 3 auf. Die Dämpfungsvorrichtung 16 ist zwischen zwei Wandungen 1 des Strukturelements 14 angeordnet, wobei die expandierbaren Materialien 2, 3 der Dämpfungsvorrichtung 16 expandiert dargestellt sind. Vor dem Einbringen der Dämpfungsvorrichtung 16 in das Strukturelement 14, d.h. zwischen die Wandungen 1, liegen das Abschottungsmaterial 2 und das Dämpfungsmaterial 3 vorzugsweise vergleichsweise flach auf dem Trägermaterial 4 auf, vgl. Figur 5. Bevorzugt kann vorgesehen sein, dass das Trägermaterial 4 zusätzlich über ein oder mehrere nicht dargestellte Rastelemente mit der Wandung 1 bzw. allgemein mit dem Strukturelement 14 verbunden ist.

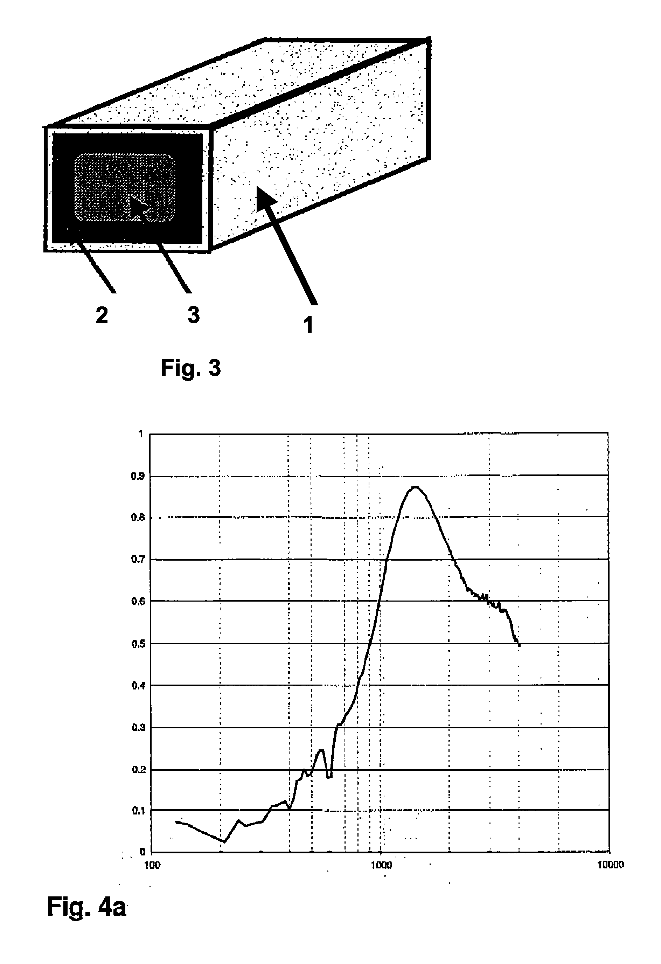

In **Figur 3** ist eine schematische Darstellung eines mit dem Absorptionsmaterial und dem Dämpfungsmaterial gefüllen Rohrs als Beispiel eines vollständig gefüllten Hohlraums in dem Strukturelement 14 gezeigt. Erkennbar ist die äußere Wandung 1 des Strukturelements 14, das sich nach innen anschließende Abschottungsmaterial 2 und das Dämpfungsmaterial 3 im Inneren, das auch als Absorptionsmaterial 3 bezeichnet wird.

In **Figur 4a** ist der dem Dämpfungsmaterial 3 zugehörige Frequenzgang der Absorptionscharakteristik dargestellt. Hierbei ist auf der Abszisse der Darstellung in Figur 4a die Frequenz in Hertz in logarithmischer Auftragung angegeben.

In **Figur 4b** sind die Frequenzgänge des Verlustfaktors für zwei Anordnungen dargestellt. Die gestrichelte Linie in Figur 4b zeigt den Frequenzgang ohne das Dämpfungsmaterial 3 und die durchgezogene Linie in Figur 4b zeigt den Frequenzgang mit absorbierendem Material bzw. mit Dämpfungsmaterial. Hierbei ist auf der Abszisse der Darstellung in Figur 4b die Frequenz in Hertz in linearer Auftragung angegeben und es ist auf der Ordinate der Verlustfaktor in Dezibel angegeben. Die durchgezogene Linie in Figur 4b gibt daher den Frequenzgang der Absorptionscharakteristik der Dämpfungsvorrichtung 16 insgesamt an. Aus den beiden Frequenzgängen in Figur 4b und aus deren Vergleich ist ersichtlich, dass der Verlustfaktor der Anordnung mit dem Dämpfungsmaterial 3 wenigstens auf dem gesamten Frequenzbereich zwischen 1 kHz und 2 kHz deutlich über etwa 40 dB liegt. Durch die Kombination mit dem Dämpfungsmaterial 3 ergibt sich somit gegenüber einer Ausführung der Dämpfungsvorrichtung 16, die lediglich das Abschottungsmaterial 2 aufweisen würde, ein deutlicher Gewinn beim akustischen Verhalten.

In **Figur 5** ist eine schematische Darstellung einer gegenüber der Figur 2 leicht modifizierten Ausführungsform einer zwischen zwei Wandungen 1 eines Strukturelements 14 angeordneten erfindungsgemäßen Dämpfungsvorrichtung 16 abgebildet, wobei die expandierbaren Bestandteile 2, 3 der Dämpfungsvorrichtung 16 noch nicht expandiert sind.

Es ist klar, dass es sich bei den **Figuren 2 und 5** um Querschnitte entlang im wesentlichen des Verlaufs von Strukturelementen 14 handelt, die insbesondere einen Hohlraum zwischen den Wandungen 1 bilden. Insofern ist die Verbindung der Dämpfungsvorrichtung 16 zur Wandung 1 hin mittels des Abschottungsmaterials 2 als vorzugsweise einen gesamten Querschnitt des Hohlraums abdichtend bzw. abschottend aufzufassen. Im Inneren bzw. in der Mitte eines solchen Querschnitts ist dann das Dämpfungsmaterial 3 als angeordnet anzusehen. Es sind weiterhin klar, dass nur die für das unmittelbare Verständnis der Erfindung wesentlichen Elemente gezeigt sind.

### Weg zur Ausführung der Erfindung

Die Dämpfungsvorrichtung 16 bildet ein vorgeformtes Blähformteil, das in einen Hohlraum der Karosserie eines Fahrzeugs, insbesondere ein Straßenfahrzeug, eingebracht und dort vorzugweise befestigt wird oder das an einem Hohlraum der Fahrzeugkarosserie befestigt bzw. angeordnet wird. Die Dämpfungsvorrichtung 16 umfasst wenigstens das Trägermaterial 4, das Dämpfungsmaterial 3 und das Abschottungsmaterial 2. Die verschiedenen Materialien der Dämpfungsvorrichtung 16 können entweder in einem mehrstufigen Spritzgussprozess miteinander verbunden werden oder aber es können diese Materialien separat hergestellt und anschließend miteinander verbunden werden. Insbesondere ist es auch möglich, dass beispielsweise das Trägermaterial 4 und das Abschottungsmaterial 2 gemeinsam in einem zweistufigen Spritzgussprozess hergestellt werden und anschließend das Dämpfungsmaterial 3 aufgebracht bzw. befestigt wird, beispielsweise geklebt wird. Die Expansion des Dämpfungsmaterials 3 und des Abschottungsmaterials 2 findet vorzugsweise in einem Elektro-Tauchlackierungsofen-Prozess statt.

Es ist nun überraschend so, dass sich die akustischen Eigenschaften erheblich verbessern lassen, wenn das Dämpfungsmaterial 3 eine offenzellige Struktur aufweist. Das bedeutet, dass verschiedene Poren des Materials miteinander in Verbindung stehen. Insbesondere wird in einem solchen Material Schallenergie besonders effektiv in Wärme umgewandelt. Alternativ zu einem offenzelligen Material ist erfindungsgemäß ein Material als Dämpfungsmaterial 3 verwendbar, welches die Eigenschaft aufweist, dass das Dämpfungsmaterial 3 Schallwellen in größerem Maße absorbiert als reflektiert bzw. welches die Eigenschaft aufweist, dass das Dämpfungsmaterial einen Absorptionskoeffizienten für Schallwellen von größer als etwa 0,5 aufweist, insbesondere in einem Frequenzbereich zwischen etwa 1 kHz und etwa 2 kHz. Hierdurch wird ebenfalls eine besonders gute akustische Wirkung erreicht. Bei einem offenzelligen Material ist jedoch mit der Offenzelligkeit in der Regel auch verbunden, dass ein solches Material anfälliger für die Aufnahme von Wasser bzw. Feuchtigkeit ist. Es sollte daher vorzugsweise vermieden werden, dass ein solches Material in Kontakt mit korrodierbaren Oberflächen bzw. Wandungen 1 gerät.

Als Trägermaterial 4 wird erfindungsgemäß insbesondere ein leichtes und stabiles sowie vorzugsweise nicht korossionsfähiges Material wie beispielsweise Polyamid verwendet. Besonders bevorzugt ist die Verwendung von Nylon PA 6.6, das insbesondere auch aus wiederverwendbaren Materialien mit bekanntem Ursprung hergestellt ist. Beim Trägermaterial 4 kommt es erfindungsgemäß insbesondere auf die mechanischen Eigenschaften an, beispielsweise die Kerbschlagzähigkeit, die Elastizität, die Bruch- oder Reißdehnung, die Biegedehnung, die Erweichungstemperatur und das Feuchtigkeitsaufnahmevermögen. Hierbei ist das Trägermaterial vorzugsweise dazu geeignet, zu 3-dimensionalen Spritzgussteilen verarbeitet zu werden, die eine ausreichende Stabilität aufweisen, um die anderen Materialien der Dämpfungsvorrichtung 16, insbesondere das Dämpfungsmaterial 3 und das Abschottungsmaterial 2, bis zu deren Expansion und auch während deren Expansion zu halten, zu fixieren und auch relativ zum Strukturelement 14 eine Fixierung der Dämpfungsvorrichtung 16 zu bewirken. Zur Verarbeitung bzw. Formgebung des Trägermaterials ist insbesondere auch die Fließfähigkeit in geschmolzenem Zustand von Bedeutung. Selbstverständlich können auch andere Materialien mit gleichen oder ähnlichen Eigenschaften als Trägermaterial 4 verwendet werden.

Als Dämpfungsmaterial 3 wird erfindungsgemäß insbesondere ein (nach der Expansion) offenzelliger Schaum verwendet, wie er beispielsweise in den Produkten SikaBaffle® 229 oder SikaBaffle® 293 (erhältlich von SIKA AG, Schweiz) vorliegt. Vor der Expansion liegt das Dämpfungsmaterial insbesondere als extrudiertes hitzeexpandierbares und gummibasiertes akustisches Absperrmittel vor. Beispielhaft umfasst das Material SikaBaffle® 229 zwei Materiallagen, die miteinander koextrudiert hergestellt werden, wovon die untere Lage eine schwarze, klebrige und nicht reaktive Klebelage mit einer Dichte von beispielsweise 1,2 kg/dm³ ist und wovon die obere (expandierbare) Lage eine dunkelgraue, schwach klebrige und starkexpandierbare Expansionslage mit einer Dichte von beispielsweise 1,5 kg/dm³ ist. Hierbei weist das Material SikaBaffle® 229 eine sehr hohe Expansionsfähigkeit von mehr als 900% auf, es hat exzellente schallabsorbierende, d.h. schalldämpfende, Eigenschaften, ist selbstklebend, kann vordimensioniert werden, weist eine weiche Konsistenz zur Herstellung eines vollständigen Kontakts auch mit unregelmäßigen Oberflächen auf, hat gute Hafteigenschaften auf öligem Metall und generell auf öligen, phosphatierten und/oder elektrobeschichteten Oberflächen, hat gute Alterungseigenschaften und ist darüber hinaus nicht toxisch. Ein solches Material weist bevorzugt folgende Eigenschaften auf: Es expandiert in 30 min bei 150°C um über 600%, in 30 min bei 165°C auf über 900% und in 30 min bei 180°C auf über 900%, wobei ein Expansionsverhältnis vertikal/horizontal ("Vertical rise/ ramp expansion, 4° ramp angle) von über 600% vorliegt. Das Material ist im Temperaturbereich von -30°C bis 70°C einsetzbar, ist widerstandsfähig gegenüber Wasser, Salzwasser und Schmierölen, hat eine Wasseraufnahme (nach der Expansion) von weniger als 5% und einen Flammpunkt (gemäß ASTM D92, COC) von über 200°C. Selbstverständlich können auch andere Materialien mit gleichen oder ähnlichen Eigenschaften als Dämpfungsmaterial 3 verwendet werden.

Als Abschottungsmaterial 2 werden erfindungsgemäß insbesondere thermoplastische oder spritzgegossene Formteile wie beispielsweise die Materialien SikaBaffle® 250 oder SikaReinforcer® 911 PB (erhältlich von SIKA AG, Schweiz) verwendet. Solche Materialien werden bevorzugt als Formteil und auf Trägern in die Rohbaustruktur der Karosserie eingebracht, beispielsweise in die Hohlräume der A-, B-, C- Säulen, des Dachrahmens und/oder der Schweller. Die Betriebsfunktionalität ist nach dem Blähvorgang (Expansion) im Elektro-Tauchlackierungsofen (KTL-Ofen) erreicht.
Das Material SikaBaffle® 250 ermöglicht einen dichten Abschluss von komplex geformten Hohlräumen und ist verträglich mit allen in der Prozessfolge dem Rohbau nachgeschalteten serienmäßig eingesetzten Produkten, ist geruchsneutral, ist lackverträglich und verursacht keine Kontamination im Elektro-Tauchlackierungs-Bad (KTL-Bad). Das Material SikaReinforcer® 911 PB verleiht der Karosserie bzw. den Karosseriehohlräumen neben diesen vorgenannten Eigenschaften eine erhöhte Steifigkeit. Insbesondere weisen beide Materialien sehr gute, die Korrosion von benachbarten bzw. angrenzenden Metallteilen - insbesondere Wandungen 1 von Strukturelementen 14 - verhindernde bzw. verzögernde Eigenschaften auf, so dass ein Korrosionsschutz von über 1000 Stunden im Salzsprühbad oder 10 Rd VDA besteht und weder eine Randkorrosion noch eine Unterrostung auftritt. Die Wasseraufnahmefähigkeit beträgt (abhängig von der Prüfmethode) weniger als 4%.

### Bezugszeichenliste

- 1: Wandung des Strukturelements
- 2: Abschottungsmaterial
- 3: Dämpfungsmaterial/Absorptionsmaterial
- 4: Trägermaterial
- 10: Rohbau der Fahrzeugkarosserie
- 14: Strukturelement
- 16: Dämpfungsvorrichtung

## Patentansprüche

1. Dämpfungsvorrichtung (16), insbesondere zum Einbau in oder an Hohlräume insbesondere von Fahrzeugen, wobei die Dämpfungsvorrichtung (16) ein Trägermaterial (4) und ein Abschottungsmaterial (2) umfasst und wobei die Dämpfungsvorrichtung (16) zur Befestigung an einem Strukturelement (14), insbesondere eines Fahrzeugs, vorgesehen ist,
**dadurch gekennzeichnet, dass** die Dämpfungsvorrichtung (16) ein Dämpfungsmaterial (3) aufweist, wobei das Dämpfungsmaterial (3) zur Ausbildung einer offenzelligen Zellstruktur vorgesehen ist oder wobei das Dämpfungsmaterial (3) einen Absorptionskoeffizienten für Schallwellen von größer als etwa 0,5 aufweist.

2. Dämpfungsvorrichtung (16) nach Anspruch 1, **dadurch gekennzeichnet, dass** das Abschottungsmaterial (2) und/oder das Dämpfungsmaterial (3) expandierbar, insbesondere hitzeexpandierbar, ist.

3. Dämpfungsvorrichtung (16) nach einem der vorhergehenden Ansprüche,
**dadurch gekennzeichnet, dass** die Expansion des Abschottungsmaterials (2) und/oder des Dämpfungsmaterials (3) derart vorgesehen ist, dass ein direkter Kontakt zwischen dem Dämpfungsmaterial (3) und einer Wandung (1) des Strukturelements (14) vermieden wird oder ausgeschlossen ist.

4. Dämpfungsvorrichtung (16) nach einem der vorhergehenden Ansprüche,
**dadurch gekennzeichnet, dass** das Dämpfungsmaterial (3) einen Absorptionskoeffizienten für Schallwellen von mindestens 0,8 aufweist.

5. Dämpfungsvorrichtung (16) nach einem der vorhergehenden Ansprüche,
**dadurch gekennzeichnet, dass** im Falle eines Kontakts zwischen der Wandung (1) des Strukturelements (14) und dem Abschottungsmaterial (2) eine Korrosion der Wandung (1) vermieden wird oder zumindest gehemmt ist, insbesondere hinsichtlich einer Randkorrosion und/oder einer Unterkorrosion.

6. Dämpfungsvorrichtung (16) nach einem der vorhergehenden Ansprüche,
**dadurch gekennzeichnet, dass** das Abschottungsmaterial (2) zur Ausbildung einer geschlossenzelligen Zellstruktur vorgesehen ist.

7. Dämpfungsvorrichtung (16) nach einem der vorhergehenden Ansprüche,
**dadurch gekennzeichnet, dass** das Abschottungsmaterial (2) eine Wasseraufnahme aufweist, die geringer ist als etwa 10%, bevorzugt geringer als etwa 5%, besonders bevorzugt geringer als etwa 4% und ganz besonders bevorzugt geringer als etwa 3%.

8. Dämpfungsvorrichtung (16) nach einem der vorhergehenden Ansprüche,
**dadurch gekennzeichnet, dass** die Dämpfungsvorrichtung (16) an dem Strukturelement (14) befestigbar ist, insbesondere in oder an der Wandung (1) des Strukturelements (14) und insbesondere mittels eines am Trägermaterial (4) angeordneten Rastelements.

9. Verfahren zur Abschottung und/oder Schalldämpfung, insbesondere in oder an Hohlräumen insbesondere von Fahrzeugen, wobei in einem ersten Schritt eine ein Trägermaterial (4), ein Abschottungsmaterial (2) und ein Dämpfungsmaterial (3) aufweisende Dämpfungsvorrichtung (16), insbesondere gemäß einem der vorhergehenden Ansprüche, an einem Strukturelement (14), insbesondere eines Fahrzeugs, befestigt oder angeordnet wird, wobei in einem zweiten Schritt das Abschottungsmaterial (2) und das Dämpfungsmaterial (3) expandiert wird, insbesondere wärmeexpandiert wird, **dadurch gekennzeichnet, dass** das Dämpfungsmaterial (3) nach der Expansion eine offenzellige Zellstruktur aufweist oder dass das Dämpfungsmaterial (3) einen Absorptionskoeffizienten für Schallwellen von größer etwa 0,5 aufweist.

10. Verfahren nach Anspruch 10, **dadurch gekennzeichnet, dass** während des zweiten Schritts die hauptsächliche Expansion des Abschottungsmaterials (2) einerseits und des Dämpfungsmaterials (3) andererseits unterschiedlich verläuft, insbesondere zu unterschiedlichen Zeiten und/oder bei unterschiedlichen Temperaturen.
